# EUROPÄISCHE PATENTANMELDUNG

(11) **EP 4 678 399 A1**
(43) Veröffentlichungstag der Anmeldung: **14.01.2026**
(21) Anmeldenummer: 24187421.3
(22) Anmeldetag: 09.07.2024
(51) Int. Cl.: B32B 38/18, B32B 37/10, B32B 38/06, B32B 38/00, B44C 1/24, B44C 5/04, B32B 21/02, E04F 15/10, E04F 13/08

(54) **VERFAHREN ZUR HERSTELLUNG VON DEKORATIVEM LAMINAT MIT DEKORSYNCHRON GEPRÄGTER OBERFLÄCHE**

(71) Anmelder: Fritz Egger GmbH & Co. OG, 6380 St. Johann in Tirol (AT)
(72) Erfinder: Fischer, Klaus, 59515 Möhnesee (DE)
(74) Vertreter: Cohausz & Florack

(57) **Zusammenfassung**

Beschrieben wird ein Verfahren zur Herstellung eines dekorativen Laminats (1) mit dekorsynchron geprägter Oberfläche mittels einer Presse unter Verwendung eines eine dreidimensionale Struktur aufweisenden Prägewerkzeuges, umfassend die Verfahrensschritte:
a) Einfahren des Prägewerkzeuges in der Presse oder einer anderen Presse, sodass dessen Dimensionen seinen während des Prägens der Oberfläche des dekorativen Laminats (1) betriebsbedingt vorliegenden Dimensionen im Wesentlichen entsprechen,
b) Prägen der Struktur des eingefahrenen Prägewerkzeuges unter Anwendung von Druck und Temperatur in die Oberfläche eines Musterlaminats, sodass das Musterlaminat eine dreidimensionale Oberflächenstruktur erhält,
c) Erfassen der dreidimensionalen Oberflächenstruktur des Musterlaminats, vorzugsweise durch Scannen der dreidimensionalen Oberflächenstruktur des Musterlaminats,
d) Entwickeln eines zu der erfassten dreidimensionalen Oberflächenstruktur passenden Dekors (2),
e) Drucken des entwickelten Dekors (2) auf einen Bedruckstoff (4),
f) Verpressen des mit dem Dekor bedruckten Bedruckstoffes (4) in Kombination mit mindestens einer durch Einwirkung von Druck und/oder Temperatur harzabgebenden Materialschicht (6, 6', 10) und einem Trägermaterial (8), und optional mindestens einer weiteren Materiallage (12) in der Presse unter Verwendung des gemäß Verfahrensschritt a) eingefahrenen Prägewerkzeuges unter Anwendung von Druck und Temperatur zu dem dekorativen Laminat (1) mit dekorsynchron geprägter Oberfläche.

## Beschreibung

Die Erfindung betrifft ein Verfahren zur Herstellung eines dekorativen Laminats, insbesondere Schichtstoffs, mit dekorsynchron geprägter Oberfläche mittels einer Presse unter Verwendung eines eine dreidimensionale Struktur aufweisenden Prägewerkzeuges.

Im Kontext der vorliegenden Erfindung wird unter dem Ausdruck "dekoratives Laminat" auch beschichteter Holzwerkstoff verstanden, zum Beispiel ein platten- oder profilförmiges Trägermaterial aus Holzwerkstoff, welches mit einem mit einem Dekor bedruckten Bedruckstoff beschichtet ist.

Hersteller von Laminaten mit dekorativen Oberflächen für verschiedene Anwendungsbereiche, zum Beispiel für Bodenbeläge, Türen, Möbel, Wand- und Deckenverkleidungen, stehen regelmäßig vor der Aufgabe, mit der dekorativen Oberfläche des Laminats die Oberfläche einer zu imitieren Vorlage möglichst realitätsnah nachzubilden. Bei den Vorlagen handelt es sich meist um Muster von Echtholz- oder Natursteinplatten oder anderen Oberflächen, zum Beispiel von Mosaikfliesenbelägen, genarbtem Leder oder Textilgewebe. Dabei genügt es heutzutage nicht mehr nur, die zu imitierende Vorlage durch ein entsprechendes zweidimensionales Dekorbild nachzuahmen, was mittels moderner Drucktechnik sehr gut gelingt, vielmehr wird zudem gefordert, dass die dekorative Oberfläche des Laminats eine dreidimensionale Struktur aufweist, die der dreidimensionalen Oberflächenstruktur der Vorlage möglichst nahekommt. Bei dekorativen Laminaten wird heute als üblicher Standard ein Oberflächenzustand gefordert, bei dem Struktur und Dekorbild nahezu übereinstimmen, d.h. weitgehend zueinander passen. Ein solcher finaler Oberflächenzustand wird auch als *"*Embossed-In-Register*"*, *"*Synchronpore*"* oder als dekorsynchron geprägte Oberfläche bezeichnet. Dieser Oberflächenzustand lässt sich aber häufig nicht problemlos erzielen, da zur Herstellung von dekorativem Laminat üblicherweise mit einem Dekor bedrucktes Papier (Dekorpapier) verwendet wird, das während der verschiedenen Produktionsschritte der Laminatherstellung Dimensionsänderungen erfährt, so dass das Dekorbild und die eingeprägte Struktur beim fertigen Laminat mitunter nicht zufriedenstellend zueinander passen.

Die Herstellung von dekorativem Laminat erfolgt diskontinuierlich, z.B. taktweise, oder kontinuierlich. Bei taktweiser Herstellung wird zum Beispiel mit Harz imprägniertes, bogenförmiges Dekorpapier zusammen mit einem plattenförmigen Trägermaterial aus Papier oder Holzwerkstoff und optional einem mit Harz imprägnierten, transparent aushärtenden Overlaypapier in einer taktweise arbeitenden Presse (Kurztaktpresse) unter Verwendung eines Pressblechs, das eine zu dem Dekor passende dreidimensionale Prägestruktur aufweist, und Anwendung hoher Temperatur zu einem dekorativen Laminat verpresst. Bei einer kontinuierlichen Herstellung von dekorativem Laminat wird dagegen zum Beispiel von einer Rolle abgewickeltes, bahnförmiges Dekorpapier, das nach dem Abwickeln mit Harz imprägniert und sodann getrocknet wird, zusammen mit bahnförmigem Trägermaterial aus mehreren harzimprägnierten Papieren und optional einem bahnförmigen, harzimprägnierten, transparent aushärtenden Overlaypapier in einer Durchlaufpresse (CPL-Presse) unter Verwendung eines umlaufenden endlosen Pressbandes, das eine zu dem Dekor passende dreidimensionale Prägestruktur aufweist, und Anwendung hoher Temperatur kontinuierlich zu einem dekorativen Laminat verpresst.

Im Stand der Technik wird zur Erzielung einer dekorsynchron geprägten Oberfläche herkömmlicherweise das bedruckte und anschließend mit Harz imprägnierte Dekorpapier relativ zu dem in einer Presse angeordneten Prägewerkzeug, z.B. Pressblech oder Pressband, das eine zu dem Dekor passende Struktur aufweist, möglichst gut zur Deckung gebracht. Eine hierzu bei einer kontinuierlichen Herstellung von dekorativem Laminat übliche Maßnahme besteht darin, das imprägnierte, bahnförmige Dekorpapier während der Zufuhr in die Durchlaufpresse (CPL-Presse) auf das strukturierte endlose Pressband zu vermitteln. Diese Maßnahme ist aber nicht ausreichend, da dadurch lediglich dem Problem des Breitenwachstums des Dekorpapiers teilweise entgegengewirkt werden kann. Durch die Positionierung des imprägnierten, bahnförmigen Dekorpapiers im Presseneinlauf werden keine Dimensionsänderungen, die während des Imprägnierens, Trocknens und Verpressens auftreten können, ausgeglichen. Bei der kontinuierlichen Herstellung von dekorativem Laminat tritt hinsichtlich der Erzielung einer dekorsynchron geprägten Oberfläche allerdings insbesondere das Problem auf, dass sich bei Verwendung eines umlaufenden endlosen Pressbandes, welches eine zu dem Dekor passende dreidimensionale Prägestruktur aufweist, Abweichungen in der Länge der dekorsynchronen Prägung über die Länge des bahnförmigen Dekorpapieres aufsummieren.

Auch die häufig angewandte Maßnahme eines Ausrichtens des imprägnierten Dekorpapiers relativ zu dem Prägewerkzeug mit Bezug auf im Randbereich des Dekorpapiers aufgedruckten Passermarken (auch Passkreuze genannt) ergibt nicht die für eine dekorsynchrone Prägung gewünschte Genauigkeit, da diese Maßnahme typischerweise nur zur Korrektur von Längenänderungen herangezogen wird. Es lassen sich daher erhebliche Abweichungen in einer Größenordnung von zum Beispiel bis zu ca. 10 mm in der Genauigkeit der Übereinstimmung von Druckdekor und eingeprägter Struktur beobachten. Zudem besteht auch hier bei der kontinuierlichen Herstellung das Problem, dass sich Fehler in der Länge aufsummieren.

Bei herkömmlichen Verfahren zur Herstellung von dekorativen Laminaten wird auf platten- oder bahnförmiges Trägermaterial Dekorpapier mittels einer Presse stoffschlüssig aufgebracht. Hierzu verwendetes Dekorpapier wird hergestellt, indem auf ein bahnförmiges Druckbasispapier, das eine gewisse Feuchte aufweist, mittels einer Druckmaschine ein gewünschtes Dekor aufgedruckt wird. Die hierzu verwendeten wässrigen Druckfarben bewirken in Kombination mit einer gewissen Bahnspannung des Papiers in der Druckmaschine eine Ausdehnung des Papiers in dessen Länge sowie in dessen Breite. Nach dem Druckprozess erfolgt eine Trocknung der Farben des Dekorpapiers, beispielsweise mittels IR-Strahler, was mitunter zu einem Austrocken des bedruckten Papiers und damit einem Schrumpfen des Papiers führt. Im nächsten Herstellungsschritt wird das bahnförmige Dekorpapier in einer sogenannten Imprägnierlinie mit wässrigem, durch Wärme härtbarem Harz, z.B. Melaminharz, imprägniert, wodurch es zu einem Quellen des Papiers kommt. Durch das Quellen und die Bahnspannung des Papiers ergibt sich wiederum eine Ausdehnung des Papiers. Anschließend wird das bedruckte und imprägnierte Papier in einer Trocknungsstation auf eine für die nachfolgende Verarbeitung geeignete Feuchte getrocknet. Durch diese Trocknung wird die Ausdehnung des Papiers wieder teilweise verringert. Im Gesamtergebnis lässt sich bei der bedruckten, harzimprägnierten und getrockneten Papierbahn ein erhebliches Längen- und Breitenwachstum feststellen. Die Dekorpapierbahn wird anschließend entweder aufgerollt oder mittels einer Schneidvorrichtung in Bogen aufgeteilt. Die Rollenware wird dann zusammen mit bahnförmigem harzimprägniertem Trägermaterial, z.B. Kernpapierlagen, und optional einem Overlay, in einer Durchlaufpresse (CPL-Presse) zu einem dekorativen Laminat verarbeitet, wobei als Presswerkzeug zur Erzeugung einer dekorsynchron geprägten Oberfläche ein entsprechend strukturiertes Pressband oder ein Strukturgeber in Form einer dreidimensional strukturierten Trennfolie ("Release-Folie") verwendet wird. Die alternative Bogenware wird dagegen zusammen mit bogenförmigem harzimprägniertem Trägermaterial, und auch optional mit einem Overlay, in einer diskontinuierlich arbeitenden Presse unter Verwendung von dreidimensional strukturierten Pressblechen oder dreidimensional strukturierten Trennfolien ("Release-Folien") verarbeitet. In jedem dieser Verarbeitungsprozesse erfolgt unter Einwirkung von hohem Druck und hoher Temperatur ein Vernetzen der wärmehärtbaren Harze und damit eine stoffschlüssige Verbindung der einzelnen Materiallagen des Laminats. Aufgrund der hohen Temperaturen erfahren die Presswerkzeuge ebenso eine Dimensionsänderung, die je nach Temperatur und Materialeigenschaften sehr unterschiedlich hoch ausfallen kann.

Im Stand der Technik existieren verschiedene Ansätze zur Erreichung des gewünschten Qualitätsniveaus von dekorativem Laminat mit dekorsynchron geprägter Oberfläche.

In der EP 3 495 153 A wird ein Verfahren zur Erzeugung von dekorativem Schichtstoff mit Synchronpore beschrieben, bei dem ein Trägermaterial auf Papierbasis mittels Digitaldruck bedruckt und die Druck- und Positionsdaten des Druckdekors gespeichert werden. Das bedruckte Trägermaterial (Dekorpapier) wird getrocknet, danach mit wärmehärtbarem Harz imprägniert und danach wieder getrocknet. Anschließend wird der Schichtstoff durch Pressen des bedruckten, harzimprägnierten Dekorpapiers zusammen mit harzimprägnierten Kernlagen und gegebenenfalls einem Overlay und/oder einer Schutzschicht unter Verwendung eines Strukturgebers erzeugt. Zudem werden bei diesem bekannten Verfahren die Dimensionen des Strukturgebers sowie die Dimensionen des Trägermaterials (Dekorpapiers) gemessen und Abweichungen der Dimensionen des Trägermaterials von den Dimensionen des Strukturgebers ermittelt. Der Strukturgeber ist beispielsweise ein Strukturgeber auf Papierbasis, ein Strukturband oder Pressblech. Anhand der ermittelten Abweichungen wird mindestens ein Korrekturfaktor berechnet, der an den Digitaldrucker übermittelt wird, um mit Hilfe des Korrekturfaktors die Dimensionen des Dekors beim Digitaldruck anzupassen. Dieses Verfahren erfordert jedoch eine aufwendige und komplizierte Mess-, Auswerte- und Steuerungstechnik, um die während der Durchführung des Verfahrens auftretenden Dimensionsänderungen des Dekorpapiers reduzieren zu können. Des Weiteren ist unbefriedigend, dass dieses bekannte Verfahren einen Digitaldruck des Dekorpapiers voraussetzt und nicht für kostengünstig durch Rotationsdrucktechnik hergestelltes Dekorpapier geeignet ist.

Ein anderes Verfahren zur Herstellung von dekorativem Laminat mit Synchronpore wird in der EP 2 447 064 B beschrieben. Dieses Verfahren umfasst als Verfahrensschritte ein kontinuierliches Verbinden eines Trägersubstrats und eines mit einem vorstimmten Dekor bedruckten Films, wodurch ein Laminat erhalten wird, und ein synchronisiertes Prägen des Laminats, wobei das Prägen mit dem Dekor des bedruckten Films synchronisiert ist. Das Prägen wird dabei unter kontinuierlichem Durchführen des Laminats zwischen einem gravierten Prägezylinder und einem Gegendruckzylinder durchgeführt, wobei ein nominaler Prägedruck zwischen dem Prägezylinder und dem Gegendruckzylinder besteht. Des Weiteren umfasst das Verfahren Bedienungen zum zur Deckung bringen des Prägezylinders, um die Synchronisation zwischen dem Prägen und dem Dekor des bedruckten Films zu erhalten, wobei eine Bedienung zum zur Deckung bringen geeignete Deckungsverschiebungen des Prägezylinders umfasst. Die Deckungsverschiebungen werden dabei in Kombination mit einer temporären Trennung zwischen dem Prägezylinder und dem Gegendruckzylinder ausgeführt, indem der Prägezylinder und der Gegendruckzylinder um ein bestimmtes Maß auseinander bewegt werden, wobei der Prägedruck auf Null gesetzt wird oder in Zusammenhang mit einer Reduzierung des Prägedruckes bei einem reduzierten Deckungsdruck, der niedriger ist als der nominale Druck. Um die Synchronisation zwischen dem Prägen und dem Dekor des bedruckten Films zu erhalten, sieht eine bevorzugte Ausgestaltung des Verfahrens vor, dass der bedruckte Film keine Dimensionsausdehnung zulässt. Hierzu wird vorgeschlagen, dass der bedruckte Film ein steifes Verstärkungsgewebe aufweist, das bevorzugt aus Glasfasern hergestellt ist. Nachteilig an diesem Verfahren ist unter anderem, dass es einen aufwendigen Korrekturprozess vorsieht, bei dem sich Unterbrechungen in der geprägten Struktur oder eine Reduzierung der Prägetiefe ergeben. Ferner ist das Angebot an bedruckten Filmen auf Basis von Glasfasern als Alternative zu klassischem Dekorpapier gering. Bedruckte Filme auf Basis von Glasfasern sind vergleichsweise teuer.

Der Erfindung liegt die Aufgabe zugrunde, ein Verfahren zur Herstellung von dekorativem Laminat mit dekorsynchron geprägter Oberfläche bereitzustellen, mit dem sich solches Laminat auf dem erforderlichen Qualitätsniveau kostengünstig erzielen lässt.

Diese Aufgabe wird durch ein Verfahren mit den in Anspruch 1 angegebenen Merkmalen gelöst. Vorteilhafte Ausgestaltung des erfindungsgemäßen Verfahrens sind in den auf Anspruch 1 rückbezogenen Unteransprüchen angegeben.

Bei dem erfindungsgemäßen Verfahren zur Herstellung von dekorativem Laminat wird eine dekorsynchron geprägte Oberfläche mittels einer Presse unter Verwendung eines eine dreidimensionale Struktur aufweisenden Prägewerkzeugs erzeugt. Das Prägewerkzeug kann auch als Strukturgeber bezeichnet werden. Das erfindungsgemäße Verfahren umfasst folgende Verfahrensschritte:
a) Einfahren des Prägewerkzeuges in der Presse oder einer anderen Presse, sodass dessen Dimensionen seinen während des Prägens der Oberfläche des dekorativen Laminats betriebsbedingt vorliegenden Dimensionen im Wesentlichen entsprechen,
b) Prägen der Struktur des eingefahrenen Prägewerkzeuges unter Anwendung von Druck und Temperatur in die Oberfläche eines Musterlaminats, sodass das Musterlaminat eine dreidimensionale Oberflächenstruktur erhält,
c) Erfassen der dreidimensionalen Oberflächenstruktur des Musterlaminats, vorzugsweise durch Scannen der dreidimensionalen Oberflächenstruktur des Musterlaminats,
d) Entwickeln eines zu der erfassten dreidimensionalen Oberflächenstruktur passenden Dekors,
e) Drucken des entwickelten Dekors auf einen Bedruckstoff,
f) Verpressen des mit dem Dekor bedruckten Bedruckstoffes in Kombination mit mindestens einer durch Einwirkung von Druck und/oder Temperatur harzabgebenden Materialschicht und einem Trägermaterial und optional mindestens einer weiteren Materiallage in der Presse unter Verwendung des gemäß Verfahrensschritt a) eingefahrenen Prägewerkzeuges unter Anwendung von Druck und Temperatur zu dem dekorativen Laminat mit dekorsynchron geprägter Oberfläche.

Die dreidimensionale Struktur des Prägewerkzeuges wird vor dem Einfahren des Prägewerkzeuges, sofern das Prägewerkzeug erst noch gefertigt werden muss, zunächst passend zu einem gewünschten Dekor auf ein Basiselement (z.B. eine Basisschicht) des Prägewerkzeuges aufgebracht.

Das Einfahren des Prägewerkzeuges gemäß Verfahrensschritt a) kann auch als Kalibrieren des Prägewerkzeuges, insbesondere als Kalibrieren des Prägewerkzeuges in Bezug auf während des Verfahrensschritts f) vorherrschende Prozessparameter, bezeichnet werden.

Das Prägewerkzeug befindet sich beispielsweise dann in einem erfindungsgemäß eingefahrenen Zustand, wenn sich die Dimensionen seiner dreidimensionalen Struktur nicht mehr wesentlich gegenüber den Dimensionen ändern, welche die dreidimensionale Struktur des Prägewerkzeugs während des Prägens der Oberfläche des dekorativen Laminats aufweist. Mit anderen Worten befindet sich das Prägewerkzeug in einem erfindungsgemäß eingefahrenen Zustand beispielsweise dann, wenn es während der Herstellung von dekorativem Laminat in der Presse herrschenden Betriebsparametern umfassend Temperatur, Pressdruck und Takt- oder Umlaufgeschwindigkeit sowie gegebenenfalls weiteren Betriebsparametern wie Pressbandspannung über einen vorgebbaren Zeitraum im Bereich von beispielsweise 1 bis 8 Stunden ausgesetzt war und sodann stabile Dimensionen aufweist.

Typischerweise ändern sich die Dimensionen des Prägewerkzeugs und damit jene der auf die Oberfläche des Laminats aufgebrachten Strukturen, wenn sich die Temperatur des Basiselements (z.B. des Metalls oder des Papiers) des Prägewerkzeugs ändert. Zur Erzielung einer passgenauen Übereinstimmung zwischen Oberflächenstruktur und Dekor ist es daher erforderlich, die Dimensionen der Oberflächenstruktur des eingefahrenen Prägewerkzeugs auf das Musterlaminat abzubilden.

Das Erfassen der dreidimensionalen Oberflächenstruktur des Musterlaminats gemäß Verfahrensschritt c) erfolgt vorzugsweise durch Scannen. Durch das Scannen werden digitale Bilddaten der dreidimensionalen Oberflächenstruktur des Musterlaminats erhalten. Als Scanner wird vorzugsweise ein Farbscanner verwendet, der die Bilddaten als RGB-Werte erfasst, die dann mit einem Algorithmus verarbeitet werden, um sie in andere Farben umzuwandeln.

Das erfindungsgemäße Verfahren ermöglicht ein kostengünstiges Herstellen von dekorativem Laminat mit dekorsynchron geprägter Oberfläche auf dem erforderlichen Qualitätsniveau, d.h. auf hohem Qualitätsniveau. Es zeichnet sich durch folgende Vorteile aus:
- Wenn die Schritte a) bis e) des erfindungsgemäßen Verfahrens einmal durchgeführt wurden, sind während der Durchführung des Verfahrensschritts f) grundsätzlich keine Korrekturen mehr notwendig.
- Das Verpressen des bedruckten Bedruckstoffes mit mindestens einer harzabgebenden Materialschicht und einem Trägermaterial - und optional mindestens einer weiteren Materiallage - gemäß Schritt f) des erfindungsgemäßen Verfahrens kann sowohl in einer diskontinuierlich arbeitenden Presse (Taktpresse) als auch in einer kontinuierlichen Presse (Durchlaufpresse) erfolgen. Die Anwendung des erfindungsgemäßen Verfahrens ist besonders bei einer kontinuierlichen Herstellung von dekorativem Laminat, vorzugsweise CPL, von Vorteil, da sich durch das erfindungsgemäße Verfahren Abweichungen in der Länge der dekorsynchronen Prägung, die sich bei herkömmlichen Verfahren zur kontinuierlichen Herstellung von dekorativem Laminat über die Länge des bahnförmigen Dekorpapieres aufsummieren, weitestgehend eliminiert werden können.
- Das Verpressen gemäß Verfahrensschritt f) kann auch getaktet ohne Zwischenabstand oder gegebenenfalls mit geringem Zwischenabstand von aufeinander folgenden Stapeln der miteinander stoffschlüssig zu dem Laminat zu verbindenden Materiallagen durchgeführt werden. Ein solches getaktetes Verpressen, bei dem aufeinander folgende Stapel der miteinander stoffschlüssig zu verbindenden Materiallagen ohne Zwischenabstand oder geringem Zwischenabstand gemäß Verfahrensschritt f) verpresst werden, kann auch als quasi kontinuierliches Verpressen angesehen bzw. gewertet werden.
- Die Anwendung des erfindungsgemäßen Verfahrens ist hinsichtlich des Druckens des entwickelten Dekors gemäß Verfahrensschritt e) weder auf die Digitaldrucktechnik noch auf die Rotationsdrucktechnik beschränkt; vielmehr lässt sich der Verfahrensschritt e) sowohl mittels Digitaldrucktechnik als auch mittels Rotationsdrucktechnik durchführen.
- Bei dem erfindungsgemäßen Verfahren werden durch das Prägen einer Oberflächenstruktur in ein Musterlaminat mittels eines gemäß Verfahrensschritt a) eingefahrenen Prägewerkzeuges und durch das Entwickeln (Generieren) des Dekors des herzustellenden dekorativen Laminats anhand der erfassten Oberflächenstruktur des Musterlaminats reale Dimensionsänderungen des Prägewerkzeuges bei Arbeitstemperatur im Vergleich zu den Dimensionen des Prägewerkzeuges bei Raumtemperatur berücksichtigt, ohne dass Rechenwerte zur Ermittlung dieser Dimensionsänderungen des Prägewerkzeuges herangezogen werden müssten.
- Das erfindungsgemäße Verfahren ist im Vergleich zu gattungsgemäßen Verfahren des Standes der Technik, die zur Erreichung einer dekorsynchron geprägten Laminatoberfläche auf dem gewünschten Qualitätsniveau berechnete Korrekturfaktoren heranziehen, erheblich einfacher und kostengünstig. Die Berechnung passender Korrekturfaktoren zur Erreichung einer dekorsynchron geprägten Laminatoberfläche auf hohem Qualitätsniveau ist aufwendig und kompliziert.
- Während gattungsgemäße Verfahren des Standes der Technik, die zur Erreichung einer dekorsynchron geprägten Laminatoberfläche auf dem gewünschten Qualitätsniveau berechnete Korrekturfaktoren heranziehen, mitunter lediglich begrenzte Korrekturen zur Verringerung von Dimensionsänderungen ermöglichen (z.B. bewirkt eine Erhöhung der Bahnspannung zur Längendehnung von imprägniertem Dekorpapier und damit zur Verringerung eines Breitenwachstums des Dekorpapiers gleichzeitig eine ungewünschte Vergrößerung des Längenwachstums des Dekorpapiers), kann mit dem erfindungsgemäßen Verfahren ein Versatz zwischen dem Dekor und der eingeprägten Struktur des Laminats sowohl in der Länge als auch in der Breite des dekorativen, dreidimensional geprägten Laminats weitgehend minimiert werden.

Eine vorteilhafte Ausgestaltung des erfindungsgemäßen Verfahrens ist dadurch gekennzeichnet, dass der mit dem Dekor bedruckte Bedruckstoff ohne einen nachfolgenden Harzimprägnierungsschritt der Presse zugeführt und in dieser mit der mindestens einen harzabgebenden Materialschicht und dem Trägermaterial, und optional mit der mindestens einen weiteren Materiallage, unter Verwendung des gemäß Schritt a) eingefahrenen Prägewerkzeuges und Anwendung von Druck und Temperatur zu dem dekorativen Laminat mit dekorsynchron geprägter Oberfläche verpresst wird. Anders ausgedrückt, - wird der mit dem Dekor bedruckte Bedruckstoff vor dem Verpressen nicht mit Harz imprägniert. Der mit dem Dekor bedruckte Bedruckstoff wird somit als bedruckter, trockener Bedruckstoff der Presse zugeführt und dort mit den anderen voranstehend genannten Materialschichten, und gegebenenfalls mit mindestens einer weiteren Materiallage, zu einem Laminat verarbeitet (verpresst). Bezüglich des bedruckten Bedruckstoffes sieht diese Ausgestaltung der Erfindung somit einen Trockenpressprozess vor. Während des Pressvorgangs wird Harz aus der mindestens einen harzabgebenden Materialschicht zumindest teilweise an den bedruckten, trockenen Bedruckstoff abgegeben. Durch diese Ausgestaltung der Erfindung kann eine durch Quellen bedingte Dimensionsänderung des bedruckten Bedruckstoffes, bei dem es sich insbesondere um Dekorpapier handeln kann, weitestgehend oder sogar im Wesentlichen vollständig verhindert werden. Dementsprechend lässt sich mit dieser Ausgestaltung ein besonders hohes Qualitätsniveau des Laminats hinsichtlich der dekorsynchronen Übereinstimmung seiner geprägten dreidimensionalen Oberflächenstruktur mit dem aufgedruckten Dekor erreichen.

Eine weitere vorteilhafte Ausgestaltung des erfindungsgemäßen Verfahrens sieht vor, dass das Musterlaminat einen Materialaufbau aufweist, der demjenigen des dekorativen Laminats entspricht. Interne Versuche seitens der Anmelderin haben ergeben, dass sich mit dieser Ausgestaltung ebenfalls ein besonders hohes Qualitätsniveau des Laminats hinsichtlich der dekorsynchronen Übereinstimmung seiner geprägten dreidimensionalen Oberfläche mit dem aufgedruckten Dekor erreichen lässt.

Eine weitere vorteilhafte Ausgestaltung des erfindungsgemäßen Verfahrens besteht im Wesentlichen darin, dass als Musterlaminat ein Laminat verwendet wird, dessen Materialaufbau einen unbedruckten Bedruckstoff aufweist. Hierdurch wird ein optisches Erfassen, insbesondere Scannen der dreidimensionalen Oberflächenstruktur des Musterlaminats erleichtert und damit die Qualität des Ergebnisses der optischen Erfassung bzw. des Scannens verbessert. Das Ergebnis ist maßgeblich für die darauf basierende Dekorentwicklung. Sofern dagegen ein Musterlaminat verwendet wird, dessen Materialaufbau einen bedruckten Bedruckstoff aufweist, kann das aufgedruckte Dekorbild ein Scannen der dreidimensionalen Oberflächenstruktur beeinträchtigen, was sich dann negativ auf die Bildqualität des auf Basis des Scan-Ergebnisses entwickelten Dekors auswirken kann.

Bei dem Prägewerkzeug, das zur Durchführung des erfindungsgemäßen Verfahrens verwendet wird, kann es sich beispielsweise um ein Pressband, ein Strukturgeberpapier, eine Strukturgeberfolie, eine Prägewalze oder ein Pressblech handeln. Sofern in dem erfindungsgemäßen Verfahren ein Strukturgeberpapier oder eine Strukturgeberfolie als Prägewerkzeug verwendet wird, kann ein solches Prägewerkzeug insbesondere in Form von Rollenware verwendet werden. Das in Form einer Rollenware ausgebildete Prägewerkzeug wird dabei zunächst von einer Rolle abgewickelt und als bahnförmiges Prägewerkzeug in einer Presse gemäß Verfahrensschritt a) eingefahren, wobei die Presse als Durchlaufpresse ausgeführt ist. In Durchlaufrichtung der Presse gesehen wird das bahnförmige Prägewerkzeug hinter der Presse zu einer Rolle (Rollenware) aufgewickelt. Der Verfahrensschritt a) wird erforderlichenfalls mehrmals wiederholt, bis das Prägewerkzeug seine finalen Dimensionen im Wesentlichen erreicht.

Das erfindungsgemäße Verfahren ist nicht auf die Anwendung einer bestimmten Pressenart beschränkt. Der Verfahrensschritt a) und/oder der Verfahrensschritt f) des erfindungsgemäßen Verfahrens können in einer Durchlaufpresse (z.B. Doppelbandpresse) oder alternativ in einer diskontinuierlich arbeitenden Presse, insbesondere in einer getaktet arbeitenden Presse, z.B. Kurztaktpresse oder Mehretagenpresse ausgeführt werden.

Eine kontinuierliche Fertigung von Laminat (Schichtstoff), auch CPL (Continuous Pressed Laminate) genannt, hat den Vorteil, dass damit Schichtstoffe unabhängig von einem Längenverschnitt produziert werden können. Zudem ermöglicht die Herstellung von Laminat in einer Durchlaufpresse, beispielsweise einer kontinuierlich arbeitenden Doppelbandpresse, eine Online-Nachbearbeitung des hergestellten Laminats (CPL). CPL kann online, unmittelbar nach der Presse, in der Breite zugeschnitten, auf der Rückseite geschliffen und/oder auf Länge formatiert werden. Auftragsbezogene Längen sind dabei flexibel und wirtschaftlich herstellbar. Hinzu kommt die Möglichkeit, dünne Laminate (Schichtstoffe) mit Dicken im Bereich von beispielsweise 0,15 bis 0,5 mm herstellen zu können und relativ dünne Laminate als Rollenware zu liefern. Darüber hinaus kann Rollenware vorteilhaft mittels kontinuierlicher Verfahren weiterverarbeitet, wie beispielsweise auf Trägerplatten aufgebracht werden.

Eine diskontinuierlich arbeitende Presse, z.B. Kurztaktpresse oder Mehretagenpresse, ermöglicht einen relativ hohen Pressdruck im Bereich von beispielsweise 50 bis 80 bar, insbesondere von 70 bis 80 bar. Damit lassen sich sogenannte Hochdrucklaminate (HPL), insbesondere dickere Schichtstoffe, wie etwa Kompaktplatten mit Dicken im Bereich von beispielsweise 2 bis 40 mm herstellen.

Das Prägewerkzeug wird in dem Verfahrensschritt a) vorzugsweise mehrfach bzw. solange eingefahren, bis es im Wesentlichen seine finalen Dimensionen erreicht, die es während des Prägens der Oberfläche des dekorativen Laminats besitzt. Hierzu sieht eine vorteilhafte Ausgestaltung des erfindungsgemäßen Verfahrens vor, dass das Einfahren des Prägewerkzeuges durch mehrfache, beispielsweise mindestens dreifache Anwendung des Prägewerkzeuges in aufeinander folgenden Pressvorgängen erfolgt.

Die Durchführung des erfindungsgemäßen Verfahrens ist nicht auf die Anwendung einer bestimmten Drucktechnik für das Aufdrucken des anhand der dreidimensionalen Oberflächenstruktur des Musterlaminats entwickelten Dekors beschränkt. Vielmehr erlaubt es das erfindungsgemäße Verfahren, dass das entwickelte Dekor mittels Digitaldruck, vorzugsweise Tintenstrahldruck, oder Rotationsdruck (z.B. Rotationstiefdruck oder Offsetdruck) auf den Bedruckstoff gedruckt werden kann. Ein Drucken des erfindungsgemäß entwickelten Dekors mittels Digitaldruck ist insbesondere dann von Vorteil, wenn häufig relativ kleine Losgrößen von dekorativem Laminat hergestellt bzw. wenn häufig die dreidimensionale Oberflächenstruktur und ein dazu passendes Druckdekor gewechselt werden. Digitaldruck ermöglicht einen schnellen Zugriff auf die Druckdaten bei kurzen Produktionszeiten. Ein Drucken des erfindungsgemäß entwickelten Dekors mittels Rotationsdruck unter Verwendung eines Druckzylinders bzw. einer Farbwalze ist dagegen insbesondere von Vorteil, wenn große Losgrößen des Dekors für große Losgrößen von dekorativem Laminat hergestellt werden sollen. Zudem ermöglicht Rotationsdruck eine besonders hohe Druckqualität, insbesondere einen randscharfen Ausdruck ohne zackige Ränder von gedruckten Dekorelementen.

Als Bedruckstoff können in dem erfindungsgemäßen Verfahren verschiedene Materialien, insbesondere Verbundmaterialien verwendet werden. Beispielsweise kann als Bedruckstoff im erfindungsgemäßen Verfahren ein Bedruckstoff aus Papier, Vorimprägnat, Karton, Material auf Papier- oder Zellulosebasis, Folie, Vlies und/oder Textilmaterial verwendet werden. Im Falle von Papier kann dieses dem zunächst unbedruckten und unbeharzten Papier eines Dekorpapiers oder dem unbedruckten und unbeharzten Papier eines Overlaypapiers entsprechen, wobei dieses Papier als Bedruckstoff dann nach Aufdrucken des entwickelten Dekors vorzugsweise ohne einen nachfolgenden Harzimprägnierschritt der Presse zugeführt wird. Der Bedruckstoff ist dabei vorzugsweise relativ dünn ausgeführt, beispielsweises als dünnes Papier mit einer Dicke im Bereich von ca. 0,03 bis 0,1 mm. Anders ausgedrückt, hat der erfindungsgemäß verwendete Bedruckstoff, beispielsweise ein Bedruckstoff aus Papier oder auf Papier- oder Zellulosebasis, auf den das Dekor aufgedruckt wird oder ist, beispielsweise ein Flächengewicht im Bereich von nur ca. 1 bis 120 g/m², insbesondere ca. 1 bis 100 g/m², vorzugsweise im Bereich von ca. 10 bis 70 g/m², besonders bevorzugt im Bereich von 20 bis 50 g/m².

Nach einer vorteilhaften Ausgestaltung der Erfindung wird in dem erfindungsgemäßen Verfahren ein sogenanntes Vorimprägnat als Bedruckstoff verwendet. Bei dem Vorimprägnat handelt es sich um einen Bedruckstoff aus Papier (Dekorrohpapier). Während der Herstellung des Papiers wird bereits ein Harz zugesetzt. Das Vorimprägnat enthält beispielsweise Acrylharz. Ein als Bedruckstoff in dem erfindungsgemäßen Verfahren verwendbares Vorimprägnat ist beispielsweise in der EP 2 537 682 B1 beschrieben, deren Offenbarungsgehalt in die vorliegende Erfindungsbeschreibung durch Bezugnahme vollständig einbezogen wird. Solche Vorimprägnate zeichnen sich durch eine hohe Spaltfestigkeit und universelle Haftung in verschiedenen Kaschierprozessen aus. Darüber hinaus lassen sich solche Vorimprägnate gut bedrucken und erfahren in nachfolgenden Verfahrensschritten keine weiteren Dimensionsänderungen, die der Produktion eines dekorsynchron geprägten Laminats abträglich wären. Solche Vorimprägnate weisen beispielsweise ein Flächengewicht im Bereich von 40 bis 120 g/m² auf.

Soweit nachfolgend von einem Overlay die Rede ist, ist damit ein mit Harz (Kunstharz) imprägniertes Overlaypapier gemeint. Dieses Overlay (Overlayimprägnat) dient als Schutz des aufgedruckten Dekorbildes des Laminats sowie als (durch Einwirkung von Druck und/oder Temperatur) harzabgebende Materialschicht.

Wenn als Bedruckstoff ein unbeharztes Overlaypapier verwendet wird, so wird dieses Papier vorzugsweise nicht als oberste Lage des dekorativen Laminats verwendet.

Eine weitere vorteilhafte Ausgestaltung des erfindungsgemäßen Verfahrens ist dadurch gekennzeichnet, dass zwischen dem Trägermaterial und dem mit dem Dekor bedruckten Bedruckstoff ein mit wärmehärtbarem Harz imprägniertes Underlay eingebracht wird. Durch ein solches Underlay lässt sich eine dauerhafte stoffschlüssige Verbindung des Bedruckstoffes mit dem Trägermaterial realisieren, wenn das Underlay als eine durch Einwirkung von Druck und/oder Temperatur harzabgebende Materialschicht ausgeführt ist. Das Trägermaterial selbst muss dabei keine Klebeeigenschaft, insbesondere keine durch Druck und/oder Temperatur aktivierbare Klebeeigenschaft aufweisen. Somit kann durch diese Ausgestaltung die Anzahl geeigneter Trägermaterialien für die Herstellung dekorativer Laminate mit dekorsynchron geprägter Oberfläche vergrößert werden. Allerdings umfasst die Erfindung insbesondere Ausgestaltungen, bei denen als Trägermaterial ein harzimprägniertes Trägermaterial bzw. ein Trägermaterial mit durch Druck und/oder Temperatur aktivierbarer Klebeeigenschaft verwendet wird. Bei dem bedruckten Bedruckstoff kann es sich bei dieser Ausgestaltung des erfindungsgemäßen Verfahrens um einen nicht mit Harz imprägnierten Bedruckstoff oder um ein Vorimprägnat der oben beschriebenen Art handeln.

In diesem Zusammenhang sieht eine weitere vorteilhafte Ausgestaltung des erfindungsgemäßen Verfahrens vor, dass das Underlay ein mit wärmehärtbarem Harz imprägniertes unifarbenes Papier ist. Durch das unifarbene Papier kann bei Auswahl einer bestimmten Farbe desselben in Kombination mit dem auf den Bedruckstoff aufgedruckten Dekor ein zwei- oder mehrschichtiges Gesamtdekor verwirklicht werden, das dem Laminat den optischen Effekt einer gewissen Dekortiefe verleiht. Das mit wärmehärtbarem Harz imprägnierte unifarbene Papier (Underlay) kann auch als Fondschicht bezeichnet werden. Des Weiteren oder alternativ kann das Underlay als Barriere zur Verhinderung chemischer Beeinflussung zwischen verschiedenen Harzen des dekorativen Laminates dienen.

Eine weitere vorteilhafte Ausgestaltung des erfindungsgemäßen Verfahrens sieht vor, dass ein Overlay aus einer mit wärmehärtbarem Harz imprägnierten, transparent aushärtenden Materiallage, vorzugsweise Papierlage, als oberste Schicht des dekorativen Laminats aufgebracht wird. Bevorzugt wird dieses Overlay ohne eine Zwischenschicht direkt auf den mit dem Dekor bedruckten Bedruckstoff aufgebracht. Das transparent aushärtende Overlay schützt das Dekor vor mechanischen und chemischen Einflüssen, insbesondere vor Abrieb. Zudem wird das Dekor beim Verpressen der aufeinanderliegenden Laminatschichten gemäß Schritt f) des erfindungsgemäßen Verfahrens durch das Overlay vor übermäßiger mechanischer Beanspruchung bzw. Beschädigung geschützt.

Das in dem erfindungsgemäßen Verfahren verwendete Trägermaterial ist oder wird beispielsweise aus Papier, Kraftpapieren, Karton, Pergament und/oder Vlies, insbesondere Glasfaservlies, und/oder einem Holzwerkstoffträger gebildet. Vorzugsweise ist das erfindungsgemäß verwendete Trägermaterial solches Trägermaterial, das mit wärmehärtbarem Harz imprägniert ist oder wird, wobei das wärmehärtbare Harz ein Phenol-Formaldehydharz oder ein Melamin-Formaldehydharz oder ein Harnstoff-Formaldehydharz oder eine Mischung aus mindestens zwei solchen Formaldehydharzen ist.

Eine weitere vorteilhafte Ausgestaltung des erfindungsgemäßen Verfahrens sieht vor, dass darin als Trägermaterial eine Holzwerkstoffplatte, eine Faserplatte, vorzugsweise eine MDF- oder HDF-Platte, eine Spanplatte und/oder eine OSB-Platte oder eine Verbundplatte aus mindestens zwei solchen Holzwerkstoffplatten verwendet wird. Das erfindungsgemäß hergestellte Laminat erhält durch ein solches Trägermaterial hohe mechanische Festigkeitseigenschaften und ist somit insbesondere zur Fertigung von Fußbodenpaneelen sowie Möbelplatten geeignet.

Das Verpressen des mit dem Dekor bedruckten Bedruckstoffs mit dem Trägermaterial zu dem dekorativen Laminat erfolgt in dem erfindungsgemäßen Verfahren bei einer Presstemperatur, die beispielsweise im Bereich von 160 bis 210°C, vorzugsweise im Bereich von 180 bis 200°C liegt.

Nach einer weiteren vorteilhaften Ausgestaltung der Erfindung ist oder wird der mit dem Dekor bedruckte Bedruckstoff mit mindestens einer oder mehreren Passermarken versehen. Dabei wird zur Erzielung von zu dem Dekor korrespondierenden dreidimensionalen Oberflächenstrukturelementen des Laminats das Prägewerkzeug in Bezug auf die mindestens eine Passermarke ausgerichtet. Diese Ausrichtung kann gegebenenfalls nur einmalig durchgeführt werden, da - nach Ausführung der Verfahrensschritte a) bis e) des erfindungsgemäßen Verfahrens - während der Durchführung des Verfahrensschritts f) grundsätzlich keine Korrekturen mehr nötig sind.

Nachfolgend wird die Erfindung anhand einer mehrere Ausführungsbeispiele darstellenden Zeichnung näher erläutert. Es zeigen:
- Fig. 1: einen Abschnitt eines dekorativen Laminats mit dekorsynchron geprägter Oberfläche, in einer Querschnittansicht;
- Fig. 2: einen Abschnitt eines dekorativen Laminats mit dekorsynchron geprägter Oberfläche gemäß einer Variante, in einer Querschnittansicht; und
- Fig. 3: einen Abschnitt eines dekorativen Laminats mit dekorsynchron geprägter Oberfläche gemäß einer weiteren Variante, in einer Querschnittansicht.

In der Zeichnung sind Ausführungsbeispiele (Varianten) eines erfindungsgemäß hergestellten dekorativen Laminats 1 dargestellt. Das Laminat 1 ist aus einem mit einem Dekor 2 bedruckten Bedruckstoff 4, mindestens einer durch Einwirkung von Druck und/oder Temperatur harzabgebenden Materialschicht 6 und einem Trägermaterial 8 aufgebaut. Optional kann der Laminataufbau mindestens eine weitere Materiallage umfassen, beispielsweise ein mit wärmehärtbarem Harz imprägniertes Overlay 10 auf Papierbasis als Deckschicht und/oder eine rückseitige Materialschicht 12 aus Papier oder auf Papierbasis als Gegenzug. Je nach Beschaffenheit des Trägermaterials 8 kann die optionale rückseitige Materialschicht 12 als Gegenzug beispielsweise aus nicht-imprägniertem Papier, insbesondere Pergamentpapier, oder aus harzimprägniertem Papier gebildet sein.

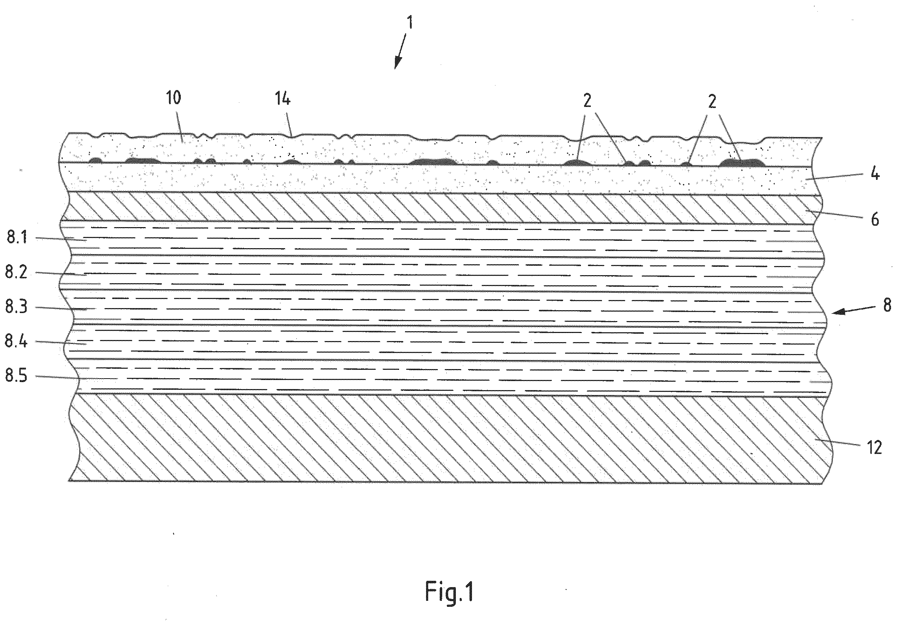

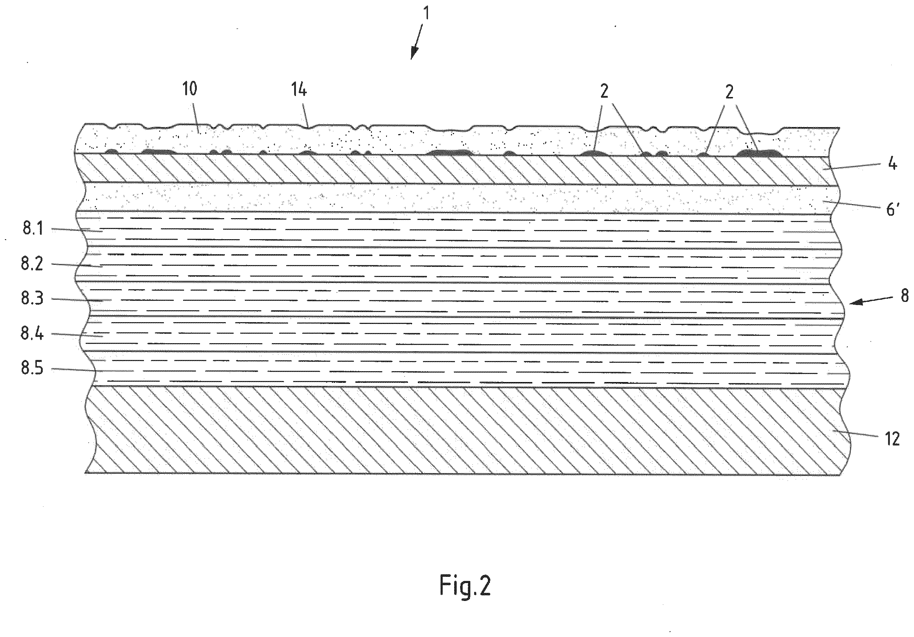

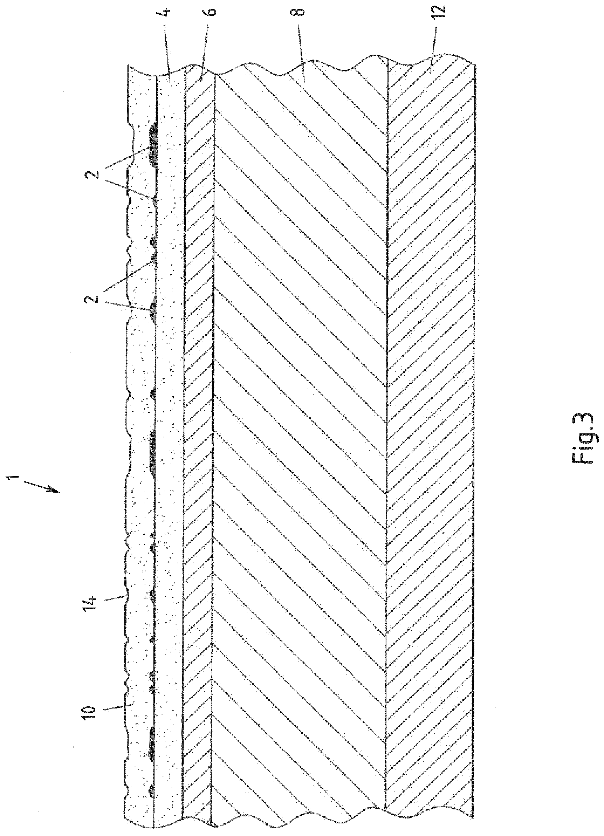

Bei dem Trägermaterial 8 handelt es sich beispielsweise um mehrere Lagen 8.1, 8.2, 8.3, 8.4, 8.5 von mit wärmehärtbarem Harz imprägniertem Papier, vorzugsweise harzimprägniertem Kraftpapier (siehe Figuren 1 und 2). Diese mit wärmehärtendem Harz imprägnierten Lagen 8.1, 8.2, 8.3, 8.4, 8.5 können auch als Kernlagen bezeichnet werden. Alternativ kann als Trägermaterial 8 bzw. Kernlage eine Holzwerkstoffplatte, beispielsweise eine MDF- oder HDF-Platte oder eine Spanplatte, in dem Laminataufbau verwendet werden (vgl. Fig. 3). Bei dem wärmehärtbaren Harz, mit dem das Trägermaterial 8 imprägniert ist bzw. welches das Trägermaterial 8 beinhaltet, handelt es sich beispielsweise um Phenol-Formaldehydharz, Melamin-Formaldehydharz, Harnstoff-Formaldehydharz oder eine Mischung aus mindestens zwei solchen Formaldehydharzen.

Bei dem Bedruckstoff 4 handelt es sich um vorzugsweise flächiges Material, das in mindestens einem Druckverfahren mit einem Dekor 2, insbesondere Holzdekor, Steindekor, Fliesendekor oder Fantasiedekor, bedruckt werden kann. Beispiele für den in dem erfindungsgemäßen Laminataufbau verwendeten Bedruckstoff 4 sind Bedruckstoffe aus Papier, Vorimprägnat, Karton, Material auf Papier- oder Zellulosebasis, Folie, Vlies und/oder Textilmaterial. Das Dekor 2 wird oder wurde auf den Bedruckstoff 4 mittels Digitaldrucktechnik, beispielsweise Tintenstrahldrucktechnik, oder mittels Rotationsdrucktechnik, beispielsweise Rotationstiefdrucktechnik, gedruckt.

In die Oberseite des Laminats 1 ist eine zu dem Dekor 2 passende dreidimensionale Struktur 14 eingeprägt. Das dekorative Laminat hat somit eine dekorsynchron geprägte Oberfläche. Das Prägen der dreidimensionalen Struktur 14 in die Oberseite des Laminataufbaus erfolgt in einer Presse unter Verwendung eines eine dreidimensionale Struktur aufweisenden Prägewerkzeuges. Das Prägewerkzeug kann beispielsweise in Form eines Pressbandes, einer Strukturgeberfolie, eines Strukturgeberpapiers, einer Prägewalze oder eines Pressbleches ausgeführt sein.

Das Verpressen des mit dem Dekor 2 bedruckten Bedruckstoffs 4 mit dem Trägermaterial 8 zu dem dekorativen Laminat 1 erfolgt bei einer Presstemperatur, die beispielsweise im Bereich von 160 bis 210°C, vorzugsweise im Bereich von 180 bis 200°C liegt. Das Verpressen der genannten Materialschichten zu dem dekorativen Laminat 1 erfolgt in einer Durchlaufpresse oder in einer diskontinuierlich arbeitenden Presse, beispielweise einer getaktet arbeitenden Presse.

Das auf den Bedruckstoff 4 aufzudruckende Dekor 2 wird in dem erfindungsgemäßen Verfahren zur Herstellung eines dekorativen Laminats 1 mit dekorsynchron geprägter Oberfläche auf besondere Weise passend zu der dreidimensionalen Struktur des Prägewerkzeuges entwickelt. Hierzu wird beispielsweise zunächst das Prägewerkzeug mit einer zu einem gewünschten Dekor passenden dreidimensionalen Struktur versehen, indem die Struktur auf ein Basiselement bzw. eine Basisschicht des Prägewerkzeuges aufgebracht wird. Beispielsweise kann die dreidimensionale Struktur in eine Oberfläche des Prägewerkzeugs eingraviert oder durch einen Ätzprozess auf einer Oberfläche des Prägewerkzeugs erzeugt werden. Alternativ kann in dem erfindungsgemäßen Verfahren zur Herstellung eines dekorativen Laminats 1 mit dekorsynchron geprägter Oberfläche von einem bereits vorhandenen, eine dreidimensionale Struktur aufweisenden Prägewerkzeug ausgegangen werden.

Anschließend wird das eine dreidimensionale Struktur aufweisende Prägewerkzeug in der zur Herstellung des dekorativen Laminats 1 bestimmten Presse, beispielsweise einer Durchlaufpresse, oder in einer anderen Presse eingefahren (kalibriert), sodass die Dimensionen des Prägewerkzeuges, zumindest die Dimensionen seiner dreidimensionalen Struktur, seinen während des Prägens der Oberfläche des dekorativen Laminats 1 betriebsbedingt vorliegenden Dimensionen im Wesentlichen entsprechen. Das Einfahren des Prägewerkzeuges erfolgt beispielsweise durch mehrfache Anwendung des Prägewerkzeuges in aufeinander folgenden Pressvorgängen. Handelt es sich bei dem Prägewerkzeug beispielsweise um ein Strukturgeberpapier, so können 3 bis 4 oder auch mehr aufeinander folgende Pressvorgänge mit dem Strukturgeberpapier nötig sein, bis dieses ausreichend stabilisierte Dimensionen erreicht. Neues Strukturgeberpapier schrumpft während den ersten Pressvorgängen bis sich seine Dimensionen stabilisieren.

Sofern in dem erfindungsgemäßen Verfahren Strukturgeberpapier oder Strukturgeberfolie als Prägewerkzeug verwendet wird, wird dieses vorzugsweise in Form von Rollenware verwendet. Ein neues Strukturgeberpapier bzw. eine neue Strukturgeberfolie wird dabei zunächst von einer Rolle abgewickelt und als bahnförmiges Prägewerkzeug in einer Durchlaufpresse unter Einwirkung von Druck und Temperatur eingefahren. In Durchlaufrichtung der Presse gesehen wird das bahnförmige Prägewerkzeug hinter der Presse zu einer Rolle (Rollenware) aufgewickelt. Dieses Einfahren des Prägewerkzeugs wird erforderlichenfalls so oft wiederholt, bis dieses ausreichend stabile Dimensionen für seine nachfolgende bestimmungsgemäße Verwendung erreicht.

Danach wird die dreidimensionale Struktur des eingefahrenen (kalibrierten) Prägewerkzeuges unter Anwendung von Druck und Temperatur in die Oberfläche eines Musterlaminats eingeprägt, sodass das Musterlaminat eine dreidimensionale Oberflächenstruktur erhält. Der Materialaufbau des Musterlaminats entspricht dabei vorzugsweise im Wesentlichen demjenigen des nachfolgend herzustellenden dekorativen Laminats 1. Die dreidimensionale Oberflächenstruktur des Musterlaminats dient als Vorlage für das zu entwickelnde Dekor 2 des herzustellenden dekorativen Laminats 1. Das Musterlaminat selbst muss hierzu kein aufgedrucktes Dekor aufweisen. Eine vorteilhafte Ausgestaltung des erfindungsgemäßen Verfahrens sieht vor, dass das Musterlaminat einen unbedruckten Bedruckstoff enthaltend mit dem eingefahrenen Prägewerkzeug produziert wird. Das mit dem eingefahrenen Prägewerkzeug produzierte Musterlaminat enthält somit vorzugsweise kein gedrucktes Dekor.

Anschließend wird die dreidimensionale Oberflächenstruktur des Musterlaminats erfasst. Die Erfassung erfolgt vorzugsweise durch Scannen. Durch das Scannen werden digitale Bilddaten der dreidimensionalen Oberflächenstruktur des Musterlaminats erhalten. Als Scanner wird beispielsweise ein Farbscanner verwendet, der die Bilddaten als RGB-Werte erfasst, die dann mit einem Algorithmus verarbeitet werden, um sie in andere Farben umzuwandeln.

Auf Basis der erfassten dreidimensionalen Oberflächenstruktur des Musterlaminats wird ein zu der Oberflächenstruktur passendes Dekor 2 entwickelt. Das entwickelte Dekor 2 wird dann auf einen Bedruckstoff 4 gedruckt, der Bestandteil des Materialaufbaus des herzustellenden dekorativen Laminats 1 wird. Das Drucken des Dekors 2 auf den Bedruckstoff 4 kann durch Rotationstiefdruck oder Digitaldruck, insbesondere Tintenstrahldruck, erfolgen. Für den Rotationstiefdruck wird eine erforderliche Anzahl von Farbdruckwalzen hergestellt, mit denen verschiedene Teilbilder bzw. Grundfarben des anhand von Bilddaten der Oberflächenstruktur des Musterlaminats entwickelten Dekors 2 gedruckt werden.

Nachfolgend wird der mit dem Dekor 2 bedruckte Bedruckstoff 4 in Kombination mit mindestens einer durch Einwirkung von Druck und/oder Temperatur harzabgebenden Materialschicht 6 und einem Trägermaterial 8 der oben genannten Art und gegebenenfalls mindestens einer weiteren Materiallage (10, 12) in der Presse unter Verwendung des eingefahrenen Prägewerkzeuges und Anwendung von Druck und Temperatur zu dem dekorativen Laminat 1 mit dekorsynchron geprägter Oberfläche verpresst. Die harzabgebende Materialschicht 6 kann auch als Klebeschicht bezeichnet werden.

Der mit dem Dekor 2 bedruckte Bedruckstoff 4 wird ohne eine nachfolgende Harzimprägnierung der Presse zugeführt und in dieser gemeinsam mit den anderen Materialschichten (Materiallagen) 6, 8 und gegebenenfalls 10, 12 unter Verwendung des eingefahrenen Prägewerkzeuges und Anwendung von Druck und Temperatur zu dem dekorativen Laminat 1 verpresst. Der der Presse zugeführte bedruckte Bedruckstoff 4 enthält somit kein Harz, welches zu einem Quellen des Bedruckstoffes 4 bzw. zu einer Dimensionsveränderung des aufgedruckten Dekors 2 führen könnte. Der bedruckte Bedruckstoff 4 wird somit trocken, d.h. für sich allein betrachtet ohne wässriges, wärmehärtbares Harz verpresst. Optional kann der der Presse zugeführte bedruckte Bedruckstoff 4 allerdings auf einem Vorimprägnat basieren. Bei dem Vorimprägnat handelt es sich beispielsweise um einen Bedruckstoff aus Papier (Dekorrohpapier). Während der Herstellung des Papiers wird bereits ein Harz zugesetzt. Auf das Vorimprägnat wird nach zumindest teilweiser Aushärtung bzw. Trocknung des Harzes das erfindungsgemäß entwickelte Dekor gedruckt.

Das erfindungsgemäß hergestellte dekorative Laminat 1 weist eine dekorsynchron geprägte Oberfläche auf, da es in dem erfindungsgemäßem Herstellungsverfahren zu keinen kritischen Dimensionsänderungen des bedruckten Bedruckstoffs 4 kommt und die dreidimensionale Struktur des Prägewerkzeuges bei Prozessbedingungen, insbesondere bei einer Temperatur abgebildet wurde, die im Wesentlichen der Prozesstemperatur während des Heißpressens entspricht.

Fig. 1 zeigt ein Ausführungsbeispiel eines erfindungsgemäß hergestellten dekorativen Laminats 1. Bei dem Laminat 1 handelt es sich beispielsweise um ein in einer kontinuierlich arbeitenden Doppelbandpresse gefertigtes CPL. Das Laminat 1 hat folgenden Materialaufbau (Schichtaufbau): Auf einer Oberseite eines Trägermaterials (Kerns) 8 ist eine harzimprägnierte Fondschicht als harzabgebende Materialschicht 6 aufgebracht. Das Trägermaterial 8 ist aus einer Vielzahl von harzimprägnierten Papierschichten 8.1, 8.2, 8.3, 8.4, 8.5, beispielsweise Natronkraftpapieren gebildet, die auch Kernlagen genannt werden. Bei den Harzen, mit denen die Kernlagen imprägniert sind, kann es sich um relativ elastische wärmehärtbare Harze handeln, beispielsweise um Phenol-Formaldehyd-Harze. Die Fondschicht 6 ist vorzugsweise mit Melamin-Formaldehyd-Harz (MF-Harz), Harnstoff-Formaldehyd-Harz (UF-Harz) oder einer Mischung davon (MUF-Harz) imprägniert. Die Fondschicht 6 ist vorzugsweise unifarben ausgebildet, beispielsweise in einem beigen, braunen oder rötlichbraunen Uni-Farbton.

Auf der Fondschicht 6 ist ein mit einem Dekor 2 bedruckter Bedruckstoff 4 aufgebracht. Das Dekor 2 imitiert z.B. eine Holzmaserung oder Natursteinmaserung. Das Dekor 2 wurde entsprechend dem erfindungsgemäßen Verfahren passend zu der dreidimensionalen Oberflächenstruktur eines Musterlaminats entwickelt, die mittels des erfindungsgemäß eingefahrenen Prägewerkzeuges in die Oberfläche des Musterlaminats geprägt wurde. Der Bedruckstoff 4 ist ein nicht-imprägnierter, vorzugsweise transparenter Bedruckstoff, beispielsweise ein nicht-imprägniertes, transparentes Papier. Der Bedruckstoff 4 hat beispielsweise ein Flächengewicht im Bereich von 1 bis 120 g/m², insbesondere von 1 bis 100 g/m², bevorzugt im Bereich von 10 bis 70 g/m², besonders bevorzugt im Bereich von 20 bis 50 g/m². Das aufgedruckte Dekor 2 befindet sich auf der Oberseite des Bedruckstoffes 4. Das Dekor 2 ist nicht vollflächig auf dem transparenten Bedruckstoff 4 aufgebracht, sondern lässt Flächenbereiche des Bedruckstoffs 4 frei, durch welche die unifarbene Fondschicht 6 sichtbar bleibt. Die Fondschicht 6 kann auch als Underlay oder harzimprägnierte Uni-Dekorschicht bezeichnet werden; sie hat insbesondere die Funktion einer durch Druck und/oder Temperatur harzabgebenden Materialschicht 6. Die harzabgebende Materialschicht 6 wirkt als beidseitige Klebeschicht.

Auf dem mit dem Dekor 2 bedruckten Bedruckstoff 4 ist ein harzimprägniertes Overlay 10 als oberste Schicht des dekorativen Laminats 1 angeordnet. Das Overlay 10 ist aus einer mit wärmehärtbarem Harz (z.B. Melaminharz) imprägnierten, transparent aushärtenden Materiallage, vorzugsweise Papierlage gebildet. Das Basismaterial (Papierlage) des Overlays 10 hat ein hohes Harzaufnahmevermögen. Das Overlay 10 wird ohne eine Zwischenschicht direkt auf den mit dem Dekor 2 bedruckten Bedruckstoff 4 aufgebracht. In das Overlay 10 wird mit dem erfindungsgemäß eingefahrenen Prägewerkzeug eine dreidimensionale Oberflächenstruktur 14 eingeprägt.

Auf einer Unterseite (Rückseite) des Laminats 1, die dem Dekor 2 abgewandt ist, ist das Trägermaterial 8 optional mit einer als Gegenzug fungierenden Materialschicht 12 versehen. Die als Gegenzug dienende Materialschicht 12 ist vorzugsweise aus nicht-imprägniertem Papier, beispielsweise Pergamentpapier gebildet. Die Dicke der Materialschicht 12 kann in etwa der Gesamtdicke der auf der Oberseite des Trägermaterials 8 angeordneten Schichten 6, 4, 10 entsprechen. Durch den durch die Materialschicht 12 geschaffenen Gegenzug wird erforderlichenfalls verhindert, dass sich das mit hoher Presstemperatur erzeugte Laminat 1 beim Abkühlen durch unterschiedliche Spannungen im Trägermaterial 8 und in den Schichten 6, 4, 10 verzieht.

In Fig. 2 ist ein weiteres Ausführungsbeispiel eines erfindungsgemäß hergestellten dekorativen Laminats 1 mit dekorsynchron geprägter Oberfläche dargestellt. Auch bei diesem Laminat 1 kann es sich um ein in einer kontinuierlich arbeitenden Doppelbandpresse gefertigtes CPL handeln. Der Materialaufbau (Schichtaufbau) des in Fig. 2 gezeigten Laminats 1 unterscheidet sich von dem Materialaufbau des in Fig. 1 gezeigten Laminats 1 hinsichtlich der zwischen Trägermaterial (Kern) 8 und Overlay 10 angeordneten Schichten 4, 6. Bei der Variante gemäß Fig. 2 ist auf einer Oberseite des Trägermaterials 8 zunächst ein harzimprägniertes Underlay 6' aufgebracht. Das Underlay 6' hat bei dieser Variante im Wesentlichen die Funktion einer durch Einwirkung von Druck und/oder Temperatur harzabgebenden Materialschicht 6. Das Underlay 6' wirkt wie eine beidseitige Klebeschicht. Es basiert auf einer Papierlage, die vorzugsweise mit einem relativ elastischen wärmehärtbaren Harz, beispielsweise mit einem Melamin-Formaldehyd-Harz, Harnstoff-Formaldehyd-Harz oder einer Mischung davon imprägniert ist.

Auf dem harzabgebenden Underlay 6' ist ein mit einem Dekor 2 bedruckter Bedruckstoff 4 aufgebracht. Bei dem Bedruckstoff 4 handelt es sich vorzugsweise um Papier. Der mit einem Dekor 2 bedruckte Bedruckstoff 4 kann somit gegebenenfalls auch als Dekorpapier bezeichnet werden. Das Dekor 2 imitiert beispielsweise eine Holz- oder Steinfläche. Das Dekor 2 wurde wiederum entsprechend dem erfindungsgemäßen Verfahren passend zu der dreidimensionalen Oberflächenstruktur eines Musterlaminats entwickelt, wobei diese Oberflächenstruktur zuvor mittels des eingefahrenen Prägewerkzeuges in die Oberfläche des Musterlaminats geprägt wurde. Der mit dem Dekor 2 bedruckte Bedruckstoff 4 ist nicht-harzimprägniert; es handelt sich also vorzugsweise um nicht-imprägniertes, trockenes Dekorpapier. Der Bedruckstoff (Dekorpapier) 4 hat beispielsweise ein Flächengewicht im Bereich von 30 bis 120 g/m², vorzugsweise im Bereich von 40 bis 80 g/m². Das aufgedruckte Dekor 2 befindet sich auf der Oberseite des Bedruckstoffes (Papiers) 4.

Auf dem bedruckten Bedruckstoff 4 ist wiederum ein harzimprägniertes Overlay 10 als oberste Schicht (Deckschicht) des Laminats 1 angeordnet. Das Overlay 10 des in Fig. 2 gezeigten Laminataufbaus entspricht dem Overlay 10 des in Fig. 1 dargestellten Laminataufbaus. Mit 14 ist die dreidimensionale Oberflächenstruktur 14 bezeichnet, die mittels des einfindungsgemäß eingefahrenen Prägewerkzeug in das Overlay 10 eingeprägt wurde. Ebenfalls kann bei der in Fig. 2 gezeigten Variante des dekorativen Laminats 1 auf der Unterseite des Trägermaterials (Kerns) 8 optional eine als Gegenzug fungierende Materialschicht 12, wie bei dem in Fig. 1 gezeigten Ausführungsbeispiel, stoffschlüssig aufgebracht sein.

Ein weiteres Ausführungsbeispiel eines erfindungsgemäß hergestellten dekorativen Laminats 1 mit dekorsynchron geprägter Oberfläche ist in Fig. 3 dargestellt. Der Materialaufbau (Schichtaufbau) des in Fig. 3 gezeigten Laminats 1 unterscheidet sich von dem Materialaufbau des in Fig. 1 gezeigten Laminats 1 hinsichtlich des Trägermaterials 8. Bei der in Fig. 3 dargestellten Variante des erfindungsgemäß hergestellten Laminats 1 ist das Trägermaterial 8 aus Holzwerkstoff gebildet, beispielsweise aus einer Spanplatte oder einer MDF- oder HDF-Platte.

Auf der Rückseite des Laminats 1 ist das Trägermaterial 8 mit einer als Gegenzug fungierenden Materialschicht 12 versehen. Die Materialschicht 12 ist in diesem Fall aus einer harzimprägnierten Materiallage, vorzugsweise aus harzimprägniertem Papier gebildet. Die Dicke der Materialschicht 12 entspricht in etwa der Gesamtdicke der auf der Oberseite des Trägermaterials 8 angeordneten Schichten 6, 4, 10.

Die Ausführung der Erfindung ist nicht auf die in der Zeichnung gezeigten Ausführungsbeispiele beschränkt. Vielmehr sind zahlreiche weitere Varianten des erfindungsgemäßen Verfahrens denkbar, die auch bei einer von den gezeigten Beispielen abweichenden Ausgestaltung vom Gegenstand der in den Ansprüchen offenbarten Erfindung Gebrauch machen. So liegt es beispielsweise auch im Rahmen der Erfindung, dass der mit dem Dekor 2 bedruckte Bedruckstoff 4 mit einer oder mehreren Passermarken versehen ist oder wird, wobei zur Erzielung von zu dem Dekor 2 korrespondierenden dreidimensionalen Oberflächenstrukturelementen des Laminats 1 das Prägewerkzeug in Bezug auf die mindestens eine Passermarke ausgerichtet wird.

## Patentansprüche

1. Verfahren zur Herstellung eines dekorativen Laminats (1) mit dekorsynchron geprägter Oberfläche mittels einer Presse unter Verwendung eines eine dreidimensionale Struktur aufweisenden Prägewerkzeuges, umfassend die Verfahrensschritte:
a) Einfahren des Prägewerkzeuges in der Presse oder einer anderen Presse, sodass dessen Dimensionen seinen während des Prägens der Oberfläche des dekorativen Laminats (1) betriebsbedingt vorliegenden Dimensionen im Wesentlichen entsprechen,
b) Prägen der Struktur des eingefahrenen Prägewerkzeuges unter Anwendung von Druck und Temperatur in die Oberfläche eines Musterlaminats, sodass das Musterlaminat eine dreidimensionale Oberflächenstruktur erhält,
c) Erfassen der dreidimensionalen Oberflächenstruktur des Musterlaminats, vorzugsweise durch Scannen der dreidimensionalen Oberflächenstruktur des Musterlaminats,
d) Entwickeln eines zu der erfassten dreidimensionalen Oberflächenstruktur passenden Dekors (2),
e) Drucken des entwickelten Dekors (2) auf einen Bedruckstoff (4),
f) Verpressen des mit dem Dekor (2) bedruckten Bedruckstoffes (4) in Kombination mit mindestens einer durch Einwirkung von Druck und/oder Temperatur harzabgebenden Materialschicht (6, 6', 10) und einem Trägermaterial (8), und optional mindestens einer weiteren Materiallage (12), in der Presse unter Verwendung des gemäß Verfahrensschritt a) eingefahrenen Prägewerkzeuges unter Anwendung von Druck und Temperatur zu dem dekorativen Laminat (1) mit dekorsynchron geprägter Oberfläche.

2. Verfahren nach Anspruch 1, wobei der mit dem Dekor (2) bedruckte Bedruckstoff (4) ohne einen nachfolgenden Harzimprägnierungsschritt der Presse zugeführt und in dieser mit der mindestens einen harzabgebenden Materialschicht (6, 6', 10) und dem Trägermaterial (8), und optional der mindestens einen weiteren Materiallage (12), unter Verwendung des gemäß Schritt a) eingefahrenen Prägewerkzeuges und Anwendung von Druck und Temperatur zu dem dekorativen Laminat (1) mit dekorsynchron geprägter Oberfläche verpresst wird.

3. Verfahren nach Anspruch 1 oder 2, wobei das Musterlaminat einen Materialaufbau aufweist, der demjenigen des dekorativen Laminats (1) entspricht.

4. Verfahren nach einem der Ansprüche 1 bis 3, wobei als Musterlaminat ein Laminat verwendet wird, dessen Materialaufbau einen unbedruckten Bedruckstoff (4) aufweist.

5. Verfahren nach einem der Ansprüche 1 bis 4, wobei als Prägewerkzeug ein Pressband, ein Strukturgeberpapier, eine Strukturgeberfolie, eine Prägewalze oder ein Pressblech verwendet wird.

6. Verfahren nach einem der Ansprüche 1 bis 5, wobei der Verfahrensschritt a) und/oder der Verfahrensschritt f) in einer Durchlaufpresse ausgeführt werden.

7. Verfahren nach einem der Ansprüche 1 bis 5, wobei der Verfahrensschritt a) und/oder der Verfahrensschritt f) in einer diskontinuierlich arbeitenden Presse, vorzugsweise einer getaktet arbeitenden Presse ausgeführt werden.

8. Verfahren nach einem der Ansprüche 1 bis 7, wobei das Einfahren des Prägewerkzeuges durch mehrfache, vorzugsweise mindestens dreifache Anwendung des Prägewerkzeuges in aufeinander folgenden Pressvorgängen erfolgt.

9. Verfahren nach einem der Ansprüche 1 bis 8, wobei das entwickelte Dekor (2) mittels Digitaldruck oder Rotationsdruck auf den Bedruckstoff (4) gedruckt wird.

10. Verfahren nach einem der Ansprüche 1 bis 9, wobei als Bedruckstoff (4) ein Bedruckstoff aus Papier, Vorimprägnat, Karton, Material auf Papier- oder Zellulosebasis, Folie, Vlies und/oder Textilmaterial verwendet wird.

11. Verfahren nach einem der Ansprüche 1 bis 10, wobei der Bedruckstoff (4), auf den das Dekor (2) aufgedruckt wird oder ist, ein Flächengewicht im Bereich von 1 bis 120 g/m², vorzugsweise im Bereich von 10 bis 70 g/m², besonders bevorzugt im Bereich von 20 bis 50 g/m² aufweist.

12. Verfahren nach einem der Ansprüche 1 bis 11, wobei zwischen dem Trägermaterial (8) und dem mit dem Dekor (2) bedruckten Bedruckstoff (4) ein mit wärmehärtbarem Harz imprägniertes Underlay (6, 6') eingebracht wird, wobei das Underlay (6, 6') vorzugsweise ohne eine Zwischenschicht direkt unter der dem Trägermaterial (8) zugewandten Seite des mit dem Dekor (2) bedruckten Bedruckstoffs (4) eingebracht wird.

13. Verfahren nach Anspruch 12, wobei das Underlay (6) ein mit wärmehärtbarem Harz imprägniertes unifarbenes Papier ist.

14. Verfahren nach einem der Ansprüche 1 bis 13, wobei ein Overlay (10) aus einer mit wärmehärtbarem Harz imprägnierten, transparent aushärtenden Materiallage, vorzugsweise Papierlage, als oberste Schicht des dekorativen Laminats (1) aufgebracht wird, wobei das Overlay (10) vorzugsweise ohne eine Zwischenschicht direkt auf den mit dem Dekor (2) bedruckten Bedruckstoff (4) aufgebracht wird.

15. Verfahren nach einem der Ansprüche 1 bis 14, wobei das Trägermaterial (8) aus Papier, Kraftpapieren, Karton, Pergament und/oder Vlies, insbesondere Glasfaservlies, und/oder einem Holzwerkstoffträger gebildet ist oder wird.

16. Verfahren nach einem der Ansprüche 1 bis 15, wobei das Trägermaterial (8) solches Trägermaterial ist, das mit wärmehärtbarem Harz imprägniert ist oder wird, wobei das wärmehärtbare Harz ein Phenol-Formaldehydharz oder ein Melamin-Formaldehydharz oder ein Harnstoff-Formaldehydharz oder eine Mischung aus mindestens zwei solchen Formaldehydharzen ist.

17. Verfahren nach einem der Ansprüche 1 bis 16, wobei als Trägermaterial (8) eine Holzwerkstoffplatte, insbesondere eine Faserplatte, vorzugsweise eine MDF- oder HDF-Platte, eine Spanplatte und/oder eine OSB-Platte oder eine Verbundplatte aus mindestens zwei solchen Holzwerkstoffplatten verwendet wird.

18. Verfahren nach einem der Ansprüche 1 bis 17, wobei das Verpressen des mit dem Dekor (2) bedruckten Bedruckstoffs (4) mit dem Trägermaterial (8) zu dem dekorativen Laminat (1) bei einer Presstemperatur im Bereich von 160 bis 210°C, vorzugsweise im Bereich von 180 bis 200°C erfolgt.

19. Verfahren nach einem der Ansprüche 1 bis 18, wobei der mit dem Dekor bedruckte Bedruckstoff (4) mit einer oder mehreren Passermarken versehen ist oder wird, und wobei zur Erzielung von zu dem Dekor (2) korrespondierenden dreidimensionalen Oberflächenstrukturelementen des Laminats (1) das Prägewerkzeug in Bezug auf die mindestens eine Passermarke ausgerichtet wird.
